Europäisches Patentamt

European Patent Office

Office européen des brevets

(19)

(11) Numéro de publication : **0 479 666 A1**

# (12) DEMANDE DE BREVET EUROPEEN

(21) Numéro de dépôt : **91402614.1**

(22) Date de dépôt : **01.10.91**

(51) Int. Cl.⁵ : **B64F 1/02,** F16F 7/12

(30) Priorité : **05.10.90 FR 9012288**

(43) Date de publication de la demande :
**08.04.92 Bulletin 92/15**

(84) Etats contractants désignés :
**BE CH DE GB IT LI NL SE**

(71) Demandeur : **THOMSON-BRANDT
ARMEMENTS
Tour Chenonceaux 204, rond-point du Pont de
Sèvres
F-92516 Boulogne-Billancourt (FR)**

(72) Inventeur : **Bernard, Marc
THOMSON-CSF, SCPI, Cédex 67
F-92045 Paris la Défense (FR)**
Inventeur : **Thouron, René
THOMSON-CSF, SCPI, Cédex 67
F-92045 Paris la Défense (FR)**
Inventeur : **Caris, Jean-Pierre
THOMSON-CSF, SCPI, Cédex 67
F-92045 Paris la Défense (FR)**
Inventeur : **Morel, Christophe
THOMSON-CSF, SCPI, Cédex 67
F-92045 Paris la Défense (FR)**
Inventeur : **Tardy, Daniel
THOMSON-CSF, SCPI, Cédex 67
F-92045 Paris la Défense (FR)**

(74) Mandataire : **Benoit, Monique et al
THOMSON-CSF SCPI
F-92045 PARIS LA DEFENSE CEDEX 67 (FR)**

(54) **Procédé et dispositif de freinage de mobile à grande énergie cinétique.**

(57)   L'invention est relative à un procédé et un dispositif de freinage progressif d'un câble accroché à un mobile se déplaçant dans une direction D, caractérisé en ce que l'avancement du câble dans la direction D d'une longueur d est utilisé pour cisailler une épaisseur e de matière sur la même longueur d dégageant ainsi un copeau linéaire de longueur d.

FIG.1

L'invention se situe dans le domaine des procédés et des dispositifs de freinage de mobile à grande énergie cinétique en particulier de freinage d'obstacles interposés sur la trajectoire de ces mobiles.

De tels procédés et dispositifs sont connus de l'art antérieur. Ainsi le brevet US N° 4 042 079 décrit un dispositif de freinage pour barrière d'arrêt d'avion dans lequel la barrière est reliée à une bande enroulée sur un tambour. le déroulement de la bande provoque la rotation du tambour qui actionne des roues à aubes qui agitent un liquide. Le système est remarquable en ce qu'il comporte un dispositif pour orienter les aubes et donc doser l'effort de freinage.

De tels dispositifs sont capables d'absorber les grandes énergies cinétiques de mobiles de forte masse et de vitesse relativement faible.

Ils ne sont cependant pas capables d'absorber l'énergie de mobiles animés de grandes vitesses car leur inertie est trop grande.

Les contraintes engendrées dans les mécanismes au cours de la phase transitoire de mise en mouvement du dispositif sont telles, en raison de l'opposition des forces d'inertie, que le dispositif se brise avant d'avoir fonctionné. Les dispositifs de ce genre sont de plus encombrants.

La présente invention vise un procédé et un dispositif capable de freiner des mobiles animés de grande vitesse par exercice continu de forces de retenue connues. L'invention vise également à fournir sous un faible encombrement un dispositif capable de freiner de façon contrôlée d'autres mobiles.

A cette fin l'invention a pour objet un procédé de freinage progressif d'un câble accroché à un mobile se déplaçant dans une direction D caractérisé en ce que l'avancement du câble dans la direction D d'une longueur d est utilisé pour cisailler une épaisseur e de matière sur la même longueur d dégageant ainsi un copeau linéaire de longueur d.

De préférence l'épaisseur e de matière cisaillée va en croissant avec la longueur d. L'épaisseur e est ainsi une fonction monotone croissante de la longueur d. De préférence également la section droite du copeau dégagé par le cisaillement sur l'épaisseur e est tel que sa masse linéaire, c'est à dire la dérivée de la masse par rapport à la longueur, va en croissant avec la longueur d. La réalisation de cette condition implique que la surface de cette section droite est une fonction monotone croissante de d.

Cette façon de procéder permet de ne mettre en mouvement à chaque instant que des masses connues et contrôlées de matière et d'éviter ainsi les ruptures provoquées par opposition de force d'inertie trop importantes.

L'invention a également pour objet un dispositif de freinage progressif d'un câble accroché à un mobile progressant dans une direction D caractérisé en ce qu'il comporte un corps comportant une surface à partir de laquelle est creusée une gorge, dans laquelle est logé le câble à freiner, le creusement de la gorge provoquant sensiblement parallèlement à la direction D et tout le long de la gorge un affaiblissement relatif de parties du corps à la résistance au cisaillement, des moyens pour maintenir le câble dans le logement constitué par la gorge de telle sorte que la sortie de la gorge d'une longueur d de câble dans la direction D ne puisse se produire que par cisaillement sur la même longueur d des parties du corps affaiblis à la résistance au cisaillement par le creusement de la gorge.

C'est principalement le cisaillement des parties affaiblies du corps par le creusement de la gorge ainsi que le frottement du câble le long du copeau dégagé par le cisaillement qui absorbera l'énergie communiquée au câble par le mobile . La masse linéaire du ou des copeaux dégagés pourra être modulée le long de la gorge pour être par exemple très faible pour les premières parties de câble dégagées et aller en croissant régulièrement au fur et à mesure du dégagement du câble.

Les moyens pour maintenir le câble dans le logement constitué par la gorge peuvent être un capot comportant une surface conjuguée de la surface du corps à partir de laquelle est creusée la gorge et des moyens de fixation du capot sur le corps. Par surface conjuguée on entend une surface qui tangente en tout point la partie en relief de surface du corps qui comporte la gorge servant de logement au câble.

De préférence la surface est un cylindre de révolution, et la gorge a préférentiellement dans ce cas une forme de spirale ayant pour axe l'axe du cylindre.

De préférence la matière constituant le corps est de faible densité et de grande résistance au cisaillement.

L'invention sera mieux comprise par la description de deux exemples particuliers de réalisation qui seront exécutés en référence aux dessins annexés dans lesquels.

La figure 1 est une demi-vue en coupe longitudinale d'un premier exemple de réalisation du dispositif selon l'invention.

La figure 2 représente une demi-coupe longitudinale du corps du premier exemple, seul.

La figure 3 représente le détail de la section droite de la gorge du premier exemple.

La figure 4 représente une vue de face d'un second exemple de réalisation.

La figure 5 représente la coupe selon AA de la figure 4.

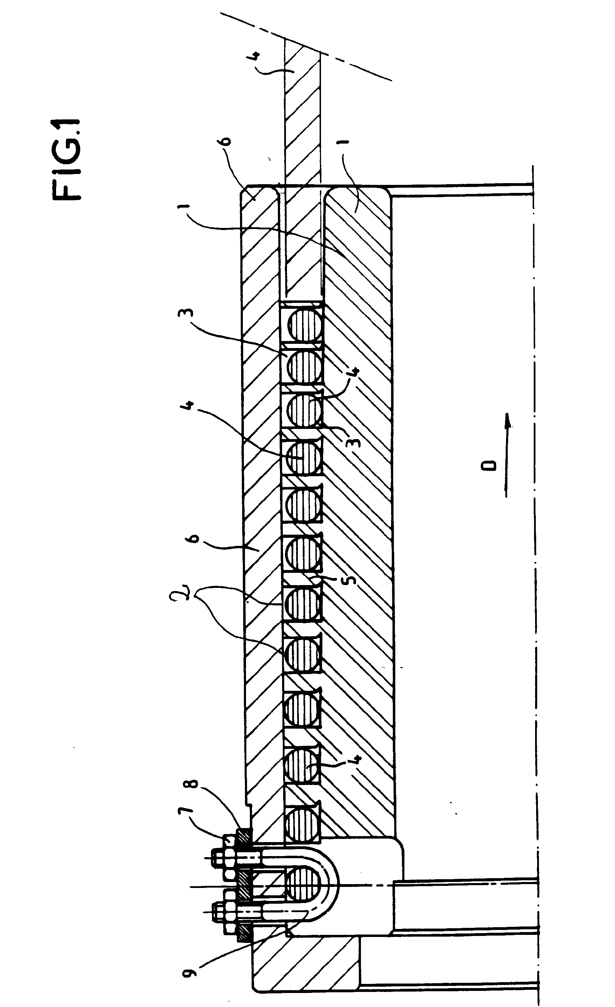

Sur la figure 1 on voit le corps 1 en coupe longitudinale, il s'agit d'un corps creux en alliage d'aluminium (AU4G) dont la surface extérieure 2 à la forme d'un cylindre. A partir de la surface extérieure 2 de ce corps est creusée une gorge 3 de section trapézoïdale. Cette gorge a la forme d'une spirale faisant plusieurs fois le tour du corps creux 1. La largeur de la gorge est égale au diamètre du câble que l'on souhaite freiner, la hauteur de la gorge est très légèrement supérieure à ce diamètre en fin de spirale et va en croissant régulièrement lorsque l'on se déplace dans la direction d..

Le câble à freiner 4 est enroulé autour du corps creux 1, logé dans la gorge 3. Les espaces non creusés de la surface 2 constituent un bossage 5 qui forme le long de la gorge 3 une spirale continue dont la section droite est trapézoïdale ; un capot 6 est fixé sur le corps par des moyens de fixation non représentés. L'extrémité du câble 4 situé à l'intérieur du corps 1 est fixée à ce dernier par des moyens 7, 8, 9.

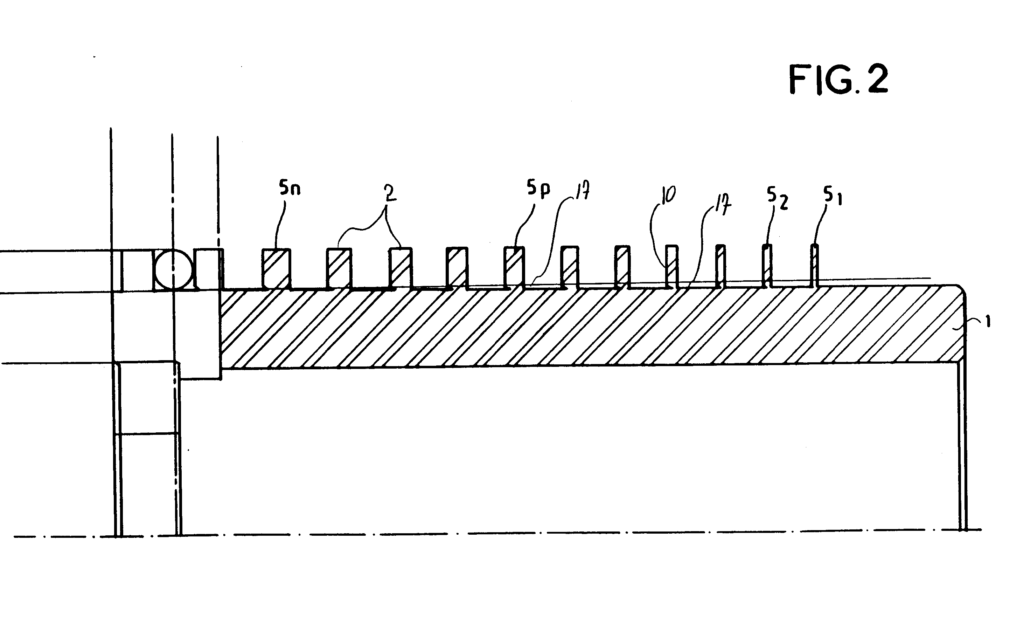

La forme générale du bossage 5 sera maintenant explicitée en référence à la figure 2.

Sur cette figure est représentée une coupe longitudinale du corps creux seul. La gorge faisant n fois le tour du corps creux 1 dégage le bossage continu en forme de spirale 5. les différentes sections droites de ce bossage ont été désignées $5_1$, $5_2...5_p...5_n$. Sur la figure 2 on voit que la largeur des sections droites va en augmentant de façon discontinue de la section droite $5_1$ à la section droite $5_n$ et que la hauteur va au contraire en diminuant. Les modifications discontinues de dimensions ainsi représentées correspondent en fait à des modifications continues de dimensions du bossage 5 au cours de chacun des tours du tronc de cône.

La hauteur du bossage 5 va en diminuant régulièrement de telle sorte que la surface engendrée à la surface du corps 1 par cisaillement du bossage 5 constitue un tronc de cône ayant pour axe, l'axe du cylindre et pour angle au sommet 1° environ. Chacun des fonds 17 de la gorge 3 constitue un élément de la surface tronconique. C'est pour cette raison que les sections droites des bossages 5 et des gorges 3 sont dites trapézoïdales

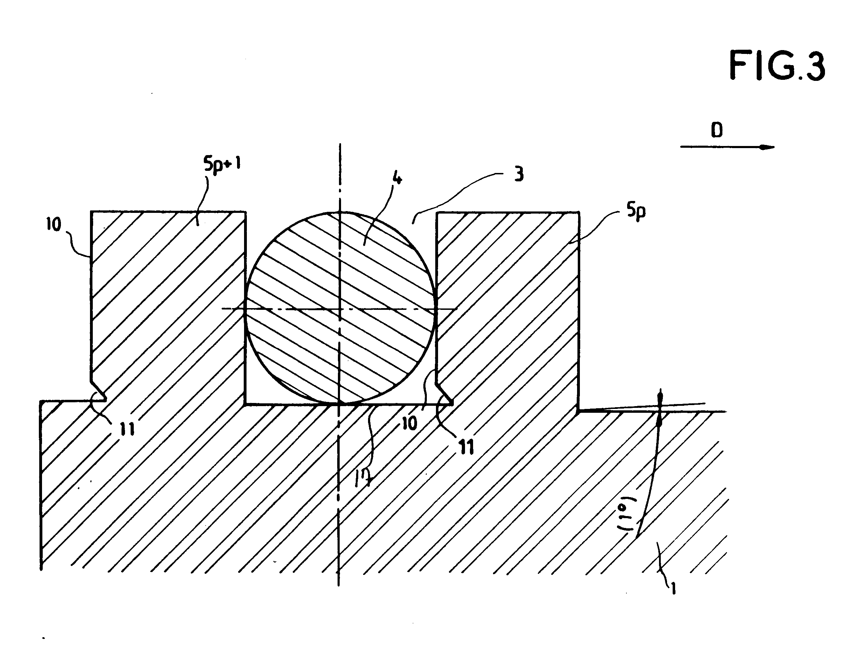

La figure 3 représente le détail de deux sections droites consécutives $5_p$ et $5_{p+1}$ du bossage 5, entre lesquelles a été représentée une section droite du câble 4.

Sur cette figure on voit que la largeur de la gorge est égale au diamètre du câble et que la hauteur est supérieure à ce diamètre. Cette différence entre la hauteur et la largeur croît régulièrement comme expliqué ci-dessus. On voit également que le bossage comporte sur le flanc opposé 10 à la direction de propagation D une amorce de rupture 11 située au bas du bossage et destinée à bien localiser le cisaillement au pied du bossage.

Le fonctionnement est le suivant :

Le corps 1 sur lequel est enroulé et fixé le câble 3 est arrimé à un bâti (non représenté). L'axe du corps 1 est parallèle à la direction de traction D du câble 4 par le mobile à freiner. Lorsqu'une traction est effectuée sur le câble 4 dans la direction D, la partie du câble 4 qui est à l'extérieur du corps 1 a tendance à se mettre à angle droit avec la partie du câble qui s'appuie sur le bossage 5. Si la traction est suffisante le bossage 5 se cisaille au niveau du changement de direction du câble ce qui permet la progression du câble de la longueur cisaillée. Le cisaillement du bossage 5 se poursuit de façon continue tant que la traction exercée sur le câble est suffisante par rapport à la force nécessaire au cisaillement du bossage 5. Il convient de noter que le copeau créé par le cisaillement à une tendance sous la pression du câble à se placer à 90° de la position qui était la sienne sur le corps. Il oppose à la pression du câble une résistance à la flexion en sorte qu'il forme un arrondi. Cet arrondi sur lequel s'appuie le câble contribue au déroulement régulier du câble. Au total il s'exerce sur le câble pour le ralentir, des farces de résistance au cisaillement, à la flexion, et des frottements du câble sur le flanc 10 du bossage opposé à la direction de traction D du câble, à l'endroit où ce dernier se transforme en copeau. En raison de se frottement on peut augmenter l'efficacité du dispositif en augmentant par des traitements appropriés de la surface 10 du bossage 5 le coefficient de frottement de cette surface par rapport à la surface extérieure du câble 4. Le traitement de la surface 10 du bossage 5 pourra être un moletage. La légère conicité donné au fond de gorge 17 du corps creux 1 est destinée à éviter que le câble 4 ne soit soumis à des à coups irréguliers par le bourrage des copeaux déjà dégagés par le déroulement du câble.

D'autres formes de surface 2 du corps 1 pourrait être envisagées.

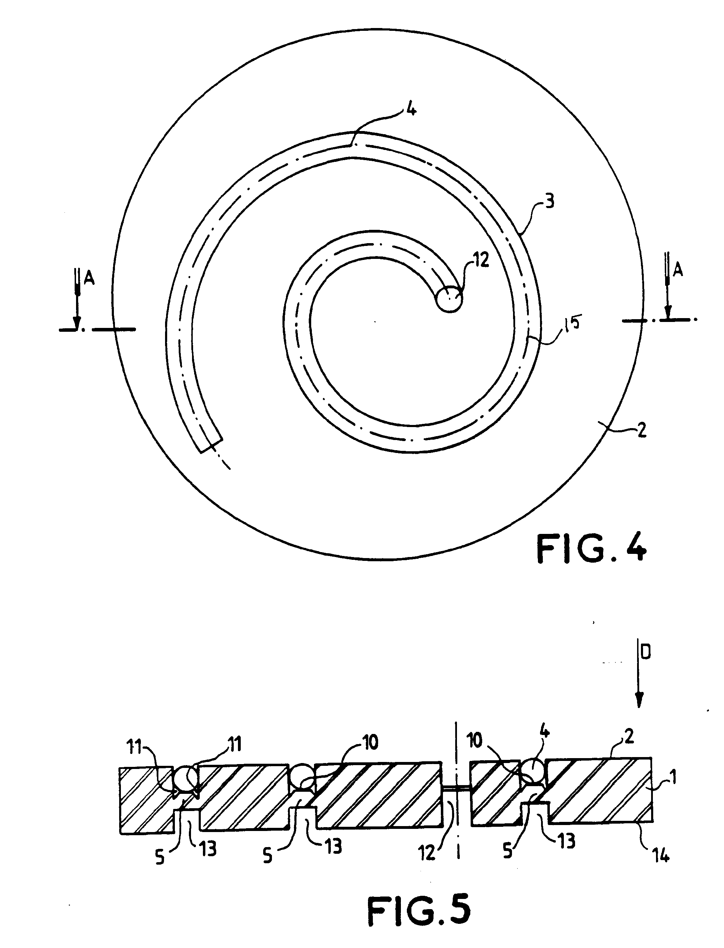

Ainsi les figures 4 et 5 représentent un deuxième exemple de réalisation dans lequel le corps 1, comporte une surface extérieure 2 en forme de cercle. Le corps 1 a dans ce cas la forme d'une plaque plane dont le plan est perpendiculaire à la direction de traction D du câble 4. Sur ces figures n'ont été représentés que les éléments utiles à la compréhension du fonctionnement. En particulier le capot 6 de fixation du câble 4 et sa fixation sur la surface 2 n'ont pas été représentés. De même les moyens de fixation de la plaque constituant le corps 1, sur son bâti de retenue n'ont pas été représentés.

Ainsi les figures 4 et 5 représentent la partie du corps 1 limité à la surface 2. La figure 4 est une vue de face lorsqu'on regarde dans la direction D, la figure 5 est une vue en coupe selon l'axe AA de la figure 4.

Sur la figure 4 on voit la surface 2 à partir de laquelle est creusée une gorge 3, dans laquelle vient se lover le câble 4, sur la figure 4 il a été représenté une gorge dont l'axe médian est une courbe en forme de spirale. N'importe quelle autre forme de courbe pourrait convenir. Il convient toutefois d'éviter les courbes contenant un point de rebroussement. Un trou 12 dans le corps 1 permet le passage du câble dans la direction D.

Sur la figure 5 on voit que le corps 1 comporte une gorge 13 creusée à partir de la face opposée 14 du corps 1. Cette gorge 13 est creusée en regard de la gorge 3. Le creusement des gorges 3 et 13 laisse subsister une épaisseur de matière 5 qui sera cisaillée par la traction du câble 4. Deux amorces de rupture 11 sont creusées dans l'épaisseur 5, au fond de la gorge 3, de façon à assurer la régularité du cisaillement. Comme dans le cas de l'exemple précédent la face 10 de l'épaisseur 5 en contact avec le câble 4 et soumise à sa pression pourra être traitée pour créer un coefficient de frottement supérieur. La profondeur de la gorge 13 est maximum au début, qui correspond à la traversée 12 de la plaque par le câble. Elle va en diminuant régulièrement ensuite de telle sorte que l'épaisseur 5 à cisailler va en croissant régulièrement comme dans l'exemple précédent.

## Revendications

1. Procédé de freinage progressif d'un câble accroché à un mobile se déplaçant dans une direction D caractérisé en ce que l'avancement du câble dans la direction D d'une longueur d est utilisé pour cisailler une épaisseur e de matière sur la même longueur d dégageant ainsi un copeau linéaire de longueur d.

2. Procédé selon la revendication 1, caractérisé en ce que l'épaisseur e de matière cisaillée va en croissant avec la longueur d.

3. Procédé selon l'une des revendications 1 ou 2, caractérisé en ce que la masse linéaire du copeau dégagé va en croissant avec la longueur d.

4. Dispositif destiné à réaliser le procédé selon la revendication 1, caractérisé en ce qu'il comporte un corps (1) comportant une surface (2) à partir de laquelle est creusée une gorge (3) dans laquelle est logée le câble (4) à freiner, le creusement de la gorge provoquant sensiblement parallèlement à la direction D et tout le long de la gorge un affaiblissement relatif d'une partie (5) du corps (1) à la résistance au cisaillement, des moyens pour maintenir le câble (4) dans le logement constitué par la gorge (3) de telle sorte que la sortie de la gorge d'une longueur d de câble dans la direction D ne puisse se produire que par cisaillement d'une épaisseur e sur la même longueur d de la partie (5) du corps (1) affaiblies à la résistance au cisaillement par le creusement de la gorge (3).

5. Dispositif selon la revendication 4, caractérisé en ce que l'épaisseur e de matière à cisailler est une fonction monotone croissante de la longueur d.

6. Dispositif selon l'une des revendications 4 ou 5, caractérisé en ce que la section droite de la partie affaiblie (5) du corps 1 a une surface qui est une fonction monotone croissante de d.

7. Dispositif selon l'une des revendications 4 à 6, caractérisé en ce que les moyens de maintien du câble (4) dans la gorge (3) sont constitué par une surface conjuguée de la surface (2) du corps.

8. Dispositif selon l'une des revendications 4 à 7, caractérisé en ce que la matière constituant le corps (1) est un alliage d'aluminium.

9. Dispositif selon l'une des revendications 4 à 8, caractérisé en ce que le corps (1) est un cylindre d'axe parallèle à la direction D et en ce que la gorge (3) décrit une spirale sur la surface extérieure (2) de ce cylindre, la spirale ayant pour axe, l'axe du cylindre.

10. Dispositif selon la revendication 9, caractérisé en ce que la surface du fond (17) de la gorge (3) se situe entièrement sur un tronc de cône ayant pour axe l'axe du cylindre et pour angle au sommet un angle de 1° environ.

11. Dispositif selon l'une des revendications 4 à 8, caractérisé en ce que le corps (1) est une plaque dont les faces (2, 14) sont perpendiculaires à la direction D comportant sur l'une de ses faces (2) une gorge (3) dont l'axe médian (15) décrit une courbe sans point de rebroussement, terminée par un trou 12.

12. Dispositif selon la revendication 11, caractérisé en ce que l'autre face (14) de la plaque 1 comporte une gorge (13) creusée en regard de la gorge 3 dont la profondeur est une fonction monotone décroissante de d.

13. Dispositif selon l'une des revendications 4 à 12, caractérisé en ce que la face (10) d'appui du câble (4) tracté dans la direction D a subi un traitement augmentant son coefficient de frottement.

14. Dispositif selon l'une des revendications 4 à 13, caractérisé en ce que la face (10) d'appui du câble (4) tracté dans la direction D comporte une amorce de rupture (11) placée au début de l'épaisseur e à cisailler par le câble (4).

FIG.1

EP 0 479 666 A1

FIG.2

# FIG.3

EP 0 479 666 A1

FIG. 4

FIG.5

**Office européen des brevets**

# RAPPORT DE RECHERCHE EUROPEENNE

Numero de la demande

EP 91 40 2614

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | US-A-3 670 852 (YARM)<br>* Colonne 3, lignes 35-42 *<br>--- | 1-3 | B 64 F 1/02<br>F 16 F 7/12 |
| A | FR-A-1 355 903 (SON MOBERG)<br>* Page 1, colonne de gauche, lignes 8-22 *<br>--- | 1 | |
| A | US-A-4 575 026 (BRITTAIN)<br>* Colonne 1, lignes 33-40 *<br>--- | 1 | |
| D,A | US-A-4 042 079 (DOOLITTLE)<br>* Document en entier *<br>----- | 1 | |

**DOMAINES TECHNIQUES RECHERCHES (Int. Cl.5)**

B 64 F
F 41 J
F 16 F

Le présent rapport a été établi pour toutes les revendications

| Lieu de la recherche | Date d'achèvement de la recherche | Examinateur |
|---|---|---|
| LA HAYE | 20-12-1991 | HAUGLUSTAINE H.P.M. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)

9